# EUROPEAN PATENT SPECIFICATION

(11) **EP 4 567 570 B1**
(45) Date of publication and mention of the grant of the patent: **28.10.2026**
(21) Application number: 24193754.9
(22) Date of filing: 09.01.2015
(51) Int. Cl.: G06F 3/0484, G06F 9/44, G06F 3/14, G06F 9/451

(54) **DESKTOP SHARING METHOD AND MOBILE TERMINAL**
VERFAHREN ZUR GEMEINSAMEN DESKTOPNUTZUNG UND MOBILES ENDGERÄT
PROCÉDÉ DE PARTAGE DE BUREAU ET TERMINAL MOBILE

(30) Priority: 06.01.2015 WO PCT/CN2015/070224
(43) Date of publication of application: 11.06.2025
(62) Document number(s) of the earlier application(s) in accordance with Art. 76 EPC: 23161659.0 / 4 235 412; 15876485.2 / 3 242 197
(73) Proprietor: Huawei Technologies Co., Ltd., Shenzhen, Guangdong 518129 (CN)
(72) Inventor: DUAN, Yun, SHENZHEN, 518129 (CN); LI, Yuan, SHENZHEN, 518129 (CN)
(74) Representative: Körber, Martin Hans

(56) References cited:
- WO-A2-2010/114724
- US-A1- 2009 319 947

## Description

This application claims priority to Chinese Patent Application No. PCT/CN2015/070224, filed with the Chinese Patent Office on January 6, 2015 and entitled "DESKTOP SHARING METHOD AND MOBILE TERMINAL' .

### TECHNICAL FIELD

The present invention relates to the communications field, and in particular, to a desktop sharing method and a mobile terminal.

### BACKGROUND

On a current Internet website, a function of sharing network resources such as various documents and applications is relatively popular. That is, a sharing button for a corresponding network resource is provided on the Internet website, and a selected network resource is shared to another user on the Internet by using a clicking operation of a user.

A vast majority of users already commonly accept obtaining of services and resources by using a mobile terminal to access the Internet. As various applications are developed and publicized, the users are strongly willing to obtain applications in which they are interested, so as to enrich functions on their mobile terminals. In addition, when obtaining some interesting or useful applications, the users are willing to share these applications to their familiar users who have similar interests.

However, all current sharing functions can implement only sharing of a single file (such as a picture, a file, music, a video, a contact, or an application), and can meet only a requirement for using and viewing a single file by a user but cannot meet a requirement for sharing and using one or more entire screen interfaces on a desktop of a mobile terminal by a user.

WO 2010/114724 discloses embodiments that enable application sharing with high fidelity, realtime performance, viewer immersion and privacy protection.

US 2009/319947 discloses systems, methods and devices for accessing portal services via a mobile communication device.

### SUMMARY

Embodiments of the present invention provide a desktop sharing method and a mobile terminal, which are used to share a desktop of a mobile terminal, so as to meet a requirement for sharing and using one or more entire screen interfaces on the desktop of the mobile terminal by a user.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

A first aspect of the embodiments of the present invention provides a desktop sharing method, including:
receiving, by a first terminal, a first operation of a user;
determining, by the first terminal, a desktop drawing file according to a desktop of the first terminal when the first operation meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element; and
sharing, by the first terminal, the determined desktop drawing file, so that a second terminal updates a desktop of the second terminal according to the shared desktop drawing file.

With reference to the first aspect of the embodiments of the present invention, in a first implementation manner of the first aspect of the embodiments of the present invention, the application interface element includes a desktop wallpaper, a desktop application, a desktop widget Widget, or a folder on a desktop.

With reference to the first aspect or the first implementation manner of the first aspect of the embodiments of the present invention, in a second implementation manner of the first aspect of the embodiments of the present invention, when the at least one application interface element includes a desktop application, the desktop description file further includes a downloading link of the desktop application.

With reference to the first aspect, or either of the first and the second implementation manners of the first aspect of the embodiments of the present invention, in a third implementation manner of the first aspect of the embodiments of the present invention, the desktop drawing file further includes a desktop preview image of the first terminal.

With reference to the first aspect, or any one of the first to the third implementation manners of the first aspect of the embodiments of the present invention, in a fourth implementation manner of the first aspect of the embodiments of the present invention, the sharing, by the first terminal, the determined desktop drawing file specifically includes:
sharing, by the first terminal, the desktop drawing file directly to the second terminal by using a wireless connection; or
sharing, by the first terminal, the desktop drawing file to a social network for the second terminal to download and use.

With reference to the first aspect, or any one of the first to the fourth implementation manners of the first aspect of the embodiments of the present invention, in a fifth implementation manner of the first aspect of the embodiments of the present invention, the receiving, by a first terminal, a first operation of a user specifically includes:
receiving, by the first terminal, a tap operation of the user; and
when an operation of tapping a desktop sharing button by the user is received, determining that the first operation meets the first preconfigured condition.

With reference to the fifth implementation manner of the first aspect of the embodiments of the present invention, in a sixth implementation manner of the first aspect of the embodiments of the present invention, before the step of receiving, by the first terminal, a tap operation of the user, the method further includes:
receiving, by the first terminal, a second operation of the user; and
entering, by the first terminal, a desktop editing interface when the second operation meets a second preconfigured condition, where the desktop sharing button is displayed on the desktop editing interface.

With reference to the first aspect, or any one of the first to the sixth implementation manners of the first aspect of the embodiments of the present invention, in a seventh implementation manner of the first aspect of the embodiments of the present invention, the receiving, by a first terminal, a first operation of a user specifically includes:
receiving, by the first terminal, a swipe operation of the user on a screen; and
determining, by the first terminal when a swiping track meets a preset condition, that the first operation meets the first preconfigured condition.

A second aspect of the embodiments of the present invention provides a desktop sharing method, including:
receiving, by a second terminal, a desktop drawing file shared by a first terminal, where the desktop drawing file includes a desktop description file and a file package of at least one screen interface on a desktop of the first terminal, the desktop description file includes a location of at least one application interface element on the desktop of the first terminal, and the file package includes a thumbnail of the at least one application interface element; and
updating, by the second terminal, a desktop of the second terminal according to the received desktop drawing file.

With reference to the second aspect of the embodiments of the present invention, in a first implementation manner of the second aspect of the embodiments of the present invention, the application interface element includes a desktop wallpaper, a desktop application, a desktop widget Widget, or a folder on a desktop.

With reference to the second aspect or the first implementation manner of the second aspect of the embodiments of the present invention, in a second implementation manner of the second aspect of the embodiments of the present invention, the updating, by the second terminal, a desktop of the second terminal according to the received desktop drawing file specifically includes:
updating, by the second terminal, a desktop drawing file of the second terminal according to the received desktop drawing file; and
displaying, by the second terminal, the desktop of the second terminal according to an updated desktop drawing file of the second terminal.

With reference to the second implementation manner of the second aspect of the embodiments of the present invention, in a third implementation manner of the second aspect of the embodiments of the present invention, the displaying, by the second terminal, the desktop of the second terminal according to an updated desktop drawing file of the second terminal specifically includes:
replacing, by the second terminal, a desktop wallpaper of the second terminal and/or arranging a desktop icon of the second terminal, according to the updated desktop drawing file of the second terminal, where the desktop icon includes an icon of the desktop application, and/or an icon of the desktop widget, and/or an icon of the folder on the desktop.

With reference to the second aspect, or any one of the first to the third implementation manners of the second aspect of the embodiments of the present invention, in a fourth implementation manner of the second aspect of the embodiments of the present invention, when the at least one application interface element includes a desktop application, the desktop description file further includes a downloading link of the desktop application; and
after the step of updating, by the second terminal, a desktop of the second terminal according to the received desktop drawing file, the method further includes:
receiving, by the second terminal when the desktop application of the first terminal is not installed on the second terminal, an operation of tapping the uninstalled desktop application on the desktop; and
downloading and installing, by the second terminal, the tapped desktop application by using the downloading link of the desktop application in the desktop description file.

With reference to the second aspect, or any one of the first to the fourth implementation manners of the second aspect of the embodiments of the present invention, in a fifth implementation manner of the second aspect of the embodiments of the present invention, the first desktop information file further includes a desktop preview image of the first terminal; and
after the step of receiving, by a second terminal, a desktop drawing file shared by a first terminal, and before the step of updating, by the second terminal, a desktop of the second terminal according to the received desktop drawing file, the method further includes:
displaying, by the second terminal, the desktop preview image of the first terminal; and
when a third operation is received, triggering the step of updating, by the second terminal, a desktop of the second terminal according to the received desktop drawing file, where the third operation is used to determine to use the received desktop drawing file.

A third aspect of the embodiments of the present invention provides a mobile terminal, serving as a first terminal and configured to share a desktop, including:
a first receiving module, configured to receive a first operation of a user;
a determining module, configured to determine a desktop drawing file according to a desktop of the first terminal when the first operation received by the first receiving module meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element; and
a sharing module, configured to share the determined desktop drawing file, so that a second terminal updates a desktop of the second terminal according to the shared desktop drawing file.

With reference to the third aspect of the embodiments of the present invention, in a first implementation manner of the third aspect of the embodiments of the present invention, the application interface element includes a desktop wallpaper, a desktop application, a desktop widget Widget, or a folder on a desktop;
when the at least one application interface element includes a desktop application, the desktop description file further includes a downloading link of the desktop application; and
the desktop drawing file further includes a desktop preview image of the first terminal.

With reference to the third aspect or the first implementation manner of the third aspect of the embodiments of the present invention, in a second implementation manner of the third aspect of the embodiments of the present invention, the sharing module is specifically configured to share the desktop drawing file directly to the second terminal by using a wireless connection, or share the desktop drawing file to a social network for the second terminal to download and use.

With reference to the third aspect, or either of the first and the second implementation manners of the third aspect of the embodiments of the present invention, in a third implementation manner of the third aspect of the embodiments of the present invention, the first receiving module specifically includes:
a first receiving unit, configured to receive a tap operation of the user; and
a first determining unit, configured to: when the first receiving unit receives an operation of tapping a desktop sharing button by the user, determine that the first operation meets the first preconfigured condition.

With reference to the third implementation manner of the third aspect of the embodiments of the present invention, in a fourth implementation manner of the third aspect of the embodiments of the present invention, the mobile terminal further includes:
a second receiving module, configured to receive a second operation of the user; and
a button display module, configured to display a desktop editing interface when the second operation received by the second receiving module meets a second preconfigured condition, where the desktop sharing button is displayed on the desktop editing interface.

With reference to the third aspect, or any one of the first to the fourth implementation manners of the third aspect of the embodiments of the present invention, in a fifth implementation manner of the third aspect of the embodiments of the present invention, the first receiving module specifically includes:
a second receiving unit, configured to receive a swipe operation of the user on a screen; and
a second determining unit, configured to: when a swiping track meets a preset condition, determine that the first operation meets the first preconfigured condition.

A fourth aspect of the embodiments of the present invention provides a mobile terminal, serving as a second terminal and configured to use a shared desktop, including:
a third receiving module, configured to receive a desktop drawing file shared by a first terminal, where the desktop drawing file includes a desktop description file and a file package of at least one screen interface on a desktop of the first terminal, the desktop description file includes a location of at least one application interface element on the desktop of the first terminal, and the file package includes a thumbnail of the at least one application interface element; and
an update module, configured to update a desktop of the second terminal according to the desktop drawing file received by the third receiving module.

With reference to the fourth aspect of the embodiments of the present invention, in a first implementation manner of the fourth aspect of the embodiments of the present invention, the application interface element includes a desktop wallpaper, a desktop application, a desktop widget Widget, or a folder on a desktop.

With reference to the fourth aspect or the first implementation manner of the fourth aspect of the embodiments of the present invention, in a second implementation manner of the fourth aspect of the embodiments of the present invention, the update module specifically includes:
an update unit, configured to update a desktop drawing file of the second terminal according to the received desktop drawing file; and
a display unit, configured to display the desktop of the second terminal according to a desktop drawing file of the second terminal updated by the update unit.

With reference to the second implementation manner of the fourth aspect of the embodiments of the present invention, in a third implementation manner of the fourth aspect of the embodiments of the present invention, the display unit is specifically configured to replace a desktop wallpaper of the second terminal and/or arrange a desktop icon of the second terminal, according to the desktop drawing file of the second terminal updated by the update unit, where the desktop icon includes an icon of the desktop application, and/or an icon of the desktop widget, and/or an icon of the folder on the desktop.

With reference to the fourth aspect, or any one of the first to the third implementation manners of the fourth aspect of the embodiments of the present invention, in a fourth implementation manner of the fourth aspect of the embodiments of the present invention, when the at least one application interface element includes a desktop application, the desktop description file further includes a downloading link of the desktop application; and
the mobile terminal further includes:
a fourth receiving module, configured to: when the desktop application of the first terminal is not installed on the second terminal, receive an operation of tapping the uninstalled desktop application on the desktop; and
an installation module, configured to download and install the tapped desktop application by using the downloading link of the desktop application in the desktop description file.

With reference to the fourth aspect, or any one of the first to the fourth implementation manners of the fourth aspect of the embodiments of the present invention, in a fifth implementation manner of the fourth aspect of the embodiments of the present invention, the first desktop information file further includes a desktop preview image of the first terminal; and
the mobile terminal further includes:
a preview display module, configured to display the desktop preview image of the first terminal; and
a trigger module, configured to trigger the update module when a third operation is received, where the third operation is used to determine to use the received desktop drawing file.

A fifth aspect of the embodiments of the present invention provides a mobile terminal, serving as a first terminal and configured to share a desktop, including:
an input apparatus, an output apparatus, a processor, and a memory; where
the processor is configured to execute the following steps by invoking an operation instruction stored in the memory:
   receiving a first operation of a user;
   determining a desktop drawing file according to a desktop of the first terminal when the first operation meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element; and
   sharing the determined desktop drawing file, so that a second terminal updates a desktop of the second terminal according to the shared desktop drawing file.

With reference to the fifth aspect of the embodiments of the present invention, in a first implementation manner of the fifth aspect of the embodiments of the present invention, the application interface element includes a desktop wallpaper, a desktop application, a desktop widget Widget, or a folder on a desktop.

With reference to the fifth aspect or the first implementation manner of the fifth aspect of the embodiments of the present invention, in a second implementation manner of the fifth aspect of the embodiments of the present invention, when the at least one application interface element includes a desktop application, the desktop description file further includes a downloading link of the desktop application.

With reference to the fifth aspect, or either of the first and the second implementation manners of the fifth aspect of the embodiments of the present invention, in a third implementation manner of the fifth aspect of the embodiments of the present invention, the desktop drawing file further includes a desktop preview image of the first terminal.

With reference to the fifth aspect, or any one of the first to the third implementation manners of the fifth aspect of the embodiments of the present invention, in a fourth implementation manner of the fifth aspect of the embodiments of the present invention, when executing the step of sharing the determined desktop drawing file, the processor is specifically configured to execute the following step:
sharing the desktop drawing file directly to the second terminal by using a wireless connection; or
sharing the desktop drawing file to a social network for the second terminal to download and use.

With reference to the fifth aspect, or any one of the first to the fourth implementation manners of the fifth aspect of the embodiments of the present invention, in a fifth implementation manner of the fifth aspect of the embodiments of the present invention, when executing the step of receiving a first operation of a user, the processor is specifically configured to execute the following steps:
receiving a tap operation of the user; and
when an operation of tapping a desktop sharing button by the user is received, determining that the first operation meets the first preconfigured condition.

With reference to the fifth implementation manner of the fifth aspect of the embodiments of the present invention, in a sixth implementation manner of the fifth aspect of the embodiments of the present invention, before executing the step of receiving a tap operation of the user, the processor is further configured to execute the following steps:
receiving a second operation of the user; and
entering a desktop editing interface when the second operation meets a second preconfigured condition, where the desktop sharing button is displayed on the desktop editing interface.

With reference to the fifth aspect, or any one of the first to the sixth implementation manners of the fifth aspect of the embodiments of the present invention, in a seventh implementation manner of the fifth aspect of the embodiments of the present invention, when executing the step of receiving a first operation of a user, the processor specifically executes the following steps:
receiving a swipe operation of the user on a screen; and
when a swiping track meets a preset condition, determining that the first operation meets the first preconfigured condition.

A sixth aspect of the embodiments of the present invention provides a mobile terminal, serving as a second terminal and configured to use a shared desktop, including:
an input apparatus, an output apparatus, a processor, and a memory; where
the processor is configured to execute the following steps by invoking an operation instruction stored in the memory:
   receiving a desktop drawing file shared by a first terminal, where the desktop drawing file includes a desktop description file and a file package of at least one screen interface on a desktop of the first terminal, the desktop description file includes a location of at least one application interface element on the desktop of the first terminal, and the file package includes a thumbnail of the at least one application interface element; and
   updating a desktop of the second terminal according to the received desktop drawing file.

With reference to the sixth aspect of the embodiments of the present invention, in a first implementation manner of the sixth aspect of the embodiments of the present invention, the application interface element includes a desktop wallpaper, a desktop application, a desktop widget Widget, or a folder on a desktop.

With reference to the sixth aspect or the first implementation manner of the sixth aspect of the embodiments of the present invention, in a second implementation manner of the sixth aspect of the embodiments of the present invention, when executing the step of updating a desktop of the second terminal according to the received desktop drawing file, the processor specifically executes the following steps:
updating a desktop drawing file of the second terminal according to the received desktop drawing file; and
displaying the desktop of the second terminal according to an updated desktop drawing file of the second terminal.

With reference to the sixth aspect, or either of the first and the second implementation manners of the sixth aspect of the embodiments of the present invention, in a third implementation manner of the sixth aspect of the embodiments of the present invention, when executing the step of displaying the desktop of the second terminal according to an updated desktop drawing file of the second terminal, the processor specifically executes the following step:
replacing a desktop wallpaper of the second terminal and/or arranging a desktop icon of the second terminal, according to the updated desktop drawing file of the second terminal, where the desktop icon includes an icon of the desktop application, and/or an icon of the desktop widget, and/or an icon of the folder on the desktop.

With reference to the sixth aspect, or any one of the first to the third implementation manners of the sixth aspect of the embodiments of the present invention, in a fourth implementation manner of the sixth aspect of the embodiments of the present invention, when the at least one application interface element includes a desktop application, the desktop description file further includes a downloading link of the desktop application; and
after executing the step of updating a desktop of the second terminal according to the received desktop drawing file, the processor is further configured to execute the following steps:
when the desktop application of the first terminal is not installed on the second terminal, receiving an operation of tapping the uninstalled desktop application on the desktop; and
downloading and installing the tapped desktop application by using the downloading link of the desktop application in the desktop description file.

With reference to the sixth aspect, or any one of the first to the fourth implementation manners of the sixth aspect of the embodiments of the present invention, in a fifth implementation manner of the sixth aspect of the embodiments of the present invention, the first desktop information file further includes a desktop preview image of the first terminal; and
after executing the step of receiving a desktop drawing file shared by a first terminal, and before executing the step of updating a desktop of the second terminal according to the received desktop drawing file, the processor is further configured to execute the following steps:
displaying the desktop preview image of the first terminal; and
when a third operation is received, triggering the step of updating a desktop of the second terminal according to the received desktop drawing file, where the third operation is used to determine to use the received desktop drawing file.

It can be learned from the foregoing technical solutions that the embodiments of the present invention have the following advantages: A first terminal determines a desktop drawing file according to a desktop of the first terminal when a first operation of a user received by the first terminal meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element; and the first terminal shares the determined desktop drawing file, so that a second terminal updates a desktop of the second terminal according to the shared desktop drawing file. At least one application interface element on at least one screen interface on a desktop of a mobile terminal is shared, so that sharing the desktop of the mobile terminal is implemented, and a requirement for sharing and using one or more entire screen interfaces on the desktop of the mobile terminal by the user is met.

### BRIEF DESCRIPTION OF DRAWINGS

FIG. 1 is a schematic flowchart of a desktop sharing method according to an embodiment of the present invention;
FIG. 2 is a schematic example diagram of a desktop sharing method according to an embodiment of the present invention;
FIG. 3 is another schematic example diagram of a desktop sharing method according to an embodiment of the present invention;
FIG. 4 is another schematic example diagram of a desktop sharing method according to an embodiment of the present invention;
FIG. 5 is another schematic example diagram of a desktop sharing method according to an embodiment of the present invention;
FIG. 6 is another schematic example diagram of a desktop sharing method according to an embodiment of the present invention;
FIG. 7 is another schematic example diagram of a desktop sharing method according to an embodiment of the present invention;
FIG. 8 is another schematic example diagram of a desktop sharing method according to an embodiment of the present invention;
FIG. 9 is a schematic structural diagram of a mobile terminal according to an embodiment of the present invention;
FIG. 10 is another schematic structural diagram of a mobile terminal according to an embodiment of the present invention;
FIG. 11 is another schematic structural diagram of a mobile terminal according to an embodiment of the present invention;
FIG. 12 is another schematic structural diagram of a mobile terminal according to an embodiment of the present invention;
FIG. 13 is another schematic structural diagram of a mobile terminal according to an embodiment of the present invention;
FIG. 14 is another schematic structural diagram of a mobile terminal according to an embodiment of the present invention;
FIG. 15 is another schematic structural diagram of a mobile terminal according to an embodiment of the present invention;
FIG. 16 is another schematic structural diagram of a mobile terminal according to an embodiment of the present invention; and
FIG. 17 is another schematic structural diagram of a mobile terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

It may be understood that, a desktop sharing method in the embodiments of the present invention involves execution bodies in two aspects: in a first aspect, a terminal sharing a desktop, which is referred to as a first terminal in the embodiments of the present invention; and in a second aspect, a terminal receiving a shared desktop, which is referred to as a second terminal in the embodiments of the present invention.

It may be understood that, a terminal draws a desktop by reading a desktop drawing file of the terminal. The desktop of the terminal may include multiple screen interfaces, and a location or a number of each screen interface on the desktop may be marked in the desktop drawing file. In the desktop sharing method in the embodiments of the present invention, the first terminal may share one screen interface on the desktop, or share multiple screen interfaces at the same time, which is not limited herein. After receiving a shared desktop drawing file, the second terminal may display a shared screen interface on a home screen interface on a desktop of the second terminal, or may display the shared screen interface on a new screen interface added on the desktop, or may replace a screen interface that is on the desktop of the second terminal and whose number is the same as a number of the shared screen interface, which is not limited herein.

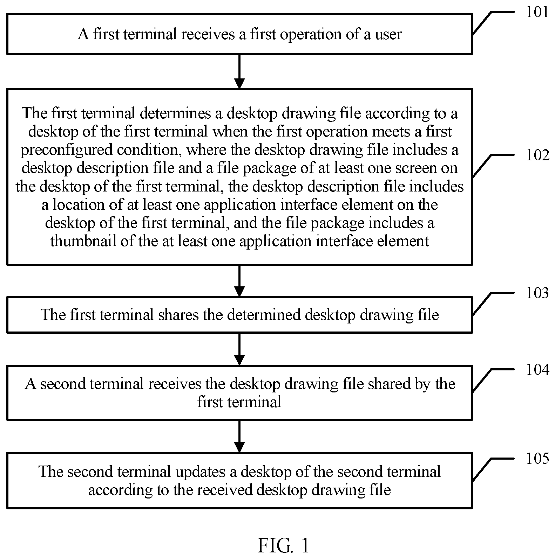

Referring to FIG 1, an embodiment of a desktop sharing method in an embodiment of the present invention includes the following steps.

101. A first terminal receives a first operation of a user.

The first terminal receives the first operation of the user, where the first operation is used to trigger desktop sharing.

It may be understood that, the first operation may have many types; correspondingly, a preset first preconfigured condition for meeting triggering of desktop sharing may also have many types. For example, optionally, the first operation may be a tap operation of the user, and the first preconfigured condition may be that the user taps a desktop sharing button. Therefore, when receiving an operation of tapping the desktop sharing button by the user, the first terminal may determine that the first operation meets the first preconfigured condition. Optionally, the first operation may also be a swipe operation of the user on a screen, and the first preconfigured condition may be a preset swiping track. Therefore, when determining that a swiping track of the user on the screen meets a preset condition, the first terminal may determine that the first operation meets the first preconfigured condition. According to an actual application situation, another first operation and a corresponding first preconfigured condition may be set, which is not limited herein.

Optionally, in another embodiment of the desktop sharing method in this embodiment of the present invention, when the first operation is a tap operation of the user and the first preconfigured condition is that the user taps a desktop sharing button, the desktop sharing button may be placed at multiple different locations. Optionally, the desktop sharing button may be directly placed on a desktop of the first terminal and may be displayed on each screen interface on the desktop. Optionally, the desktop sharing button may be displayed on a desktop editing interface; a second terminal enters the desktop editing interface and the desktop sharing button may then be displayed on the desktop editing interface only when the first terminal receives a second operation of the user and the second operation meets a second preconfigured condition, which is not limited herein.

102. The first terminal determines a desktop drawing file according to a desktop of the first terminal when the first operation meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element.

When determining that the first operation meets the first preconfigured condition, the first terminal determines the desktop drawing file according to the desktop of the first terminal. The desktop drawing file may be used to draw a desktop or a screen interface on a desktop. The desktop drawing file includes the desktop description file and the file package of the at least one screen interface on the desktop of the first terminal, the desktop description file includes the location of the at least one application interface element on the desktop of the first terminal, and the file package includes the thumbnail of the at least one application interface element.

It should be noted that, the application interface element may be a desktop wallpaper, a desktop application, a desktop widget Widget, or a folder on a desktop. In this embodiment, according to an application interface element on a screen interface on the desktop that is determined for sharing, the application interface element included in the desktop drawing file may be at least one of the desktop wallpaper, the desktop application, the desktop widget Widget, or the folder on the desktop.

Optionally, when the first operation meets the first preconfigured condition, and before the first terminal determines the desktop drawing file, the first terminal may further receive an operation of selecting at least one application interface element that needs to be shared. The selected application interface element may be located on one screen interface, or may be located on multiple screen interfaces. The first terminal may make the determined desktop drawing file include only information about the selected application interface element and information about the screen interface on which the selected application interface element is located. That is, the shared desktop drawing file may not include information about an unselected application interface element, so that privacy of the user can be better protected.

Optionally, the desktop description file may be a file in an XML format, and the file package may be a compressed file package.

It should be noted that, the desktop description file describes each application interface element on the screen interface on the shared desktop, the location of each application interface element displayed on the desktop of the first terminal, and a package name and a name of each application interface element. In addition, the desktop description file includes a location at which the thumbnail of the application interface element is stored in the file package. The file package includes the thumbnail of the application interface element. The desktop drawing file that includes the desktop description file and the file package may be used to draw the desktop or the screen interface on the desktop.

Optionally, the desktop drawing file may further include a desktop preview image of the first terminal. Specifically, information about the desktop preview image may be recorded in the desktop description file, and the desktop preview image may be stored in the file package.

Optionally, when a shared screen interface includes a desktop application, the desktop description file may further include a downloading link of the desktop application, or the file package may include software of the desktop application. Correspondingly, for a desktop wallpaper, a desktop widget, or the like, the desktop description file may further include a corresponding downloading link, which is not limited herein.

103. The first terminal shares the determined desktop drawing file.

After determining the desktop drawing file, the terminal shares the determined desktop drawing file.

It should be noted that, the desktop drawing file may be shared in many manners. Optionally, the first terminal shares the desktop drawing file directly to the second terminal by using a wireless connection. Optionally, the first terminal shares the desktop drawing file to a social network for the second terminal to download and use, and there may further be other manners, which is not limited herein.

104. A second terminal receives the desktop drawing file shared by the first terminal.

The second terminal receives a desktop file shared by the first terminal.

Optionally, the second terminal may directly receive, by using the wireless connection, the desktop drawing file transmitted by the first terminal.

Optionally, the second terminal may also download, from the social network, the desktop file shared by the first terminal.

105. The second terminal updates a desktop of the second terminal according to the received desktop drawing file.

After receiving the desktop drawing file shared by the first terminal, the second terminal updates the desktop of the second terminal according to the received desktop drawing file.

Specifically, the second terminal may update a desktop drawing file of the second terminal according to the received desktop drawing file, where the desktop drawing file of the second terminal is used to draw the desktop of the second terminal. The second terminal displays the desktop of the second terminal according to an updated desktop drawing file of the second terminal. Specifically, the second terminal may replace a desktop wallpaper of the second terminal and/or arrange a desktop icon of the second terminal, according to the updated desktop drawing file of the second terminal, where the desktop icon includes an icon of the desktop application, and/or an icon of the desktop widget, and/or an icon of the folder on the desktop. It may be understood that, the desktop icon of the second terminal is arranged according to the updated desktop drawing file of the second terminal. If the shared screen interface is displayed on an existing screen interface of the second terminal, it is equivalent to using the application interface element that is on the desktop of the first terminal and in the desktop drawing file determined by the first terminal to replace an application interface element on the desktop of the second terminal. If a screen interface is added on the second terminal to display the shared screen interface, it is equivalent to directly displaying, on the newly added screen interface on the desktop of the second terminal, the application interface element that is on the desktop of the first terminal and in the desktop drawing file determined by the first terminal.

Optionally, in another embodiment of the desktop sharing method according to this embodiment of the present invention, the received desktop drawing file may further include a desktop theme of the first terminal, and the second terminal may further apply the desktop theme of the first terminal.

Optionally, in another embodiment of the desktop sharing method according to this embodiment of the present invention, when the shared screen interface of the first terminal includes a desktop application, the desktop description file may further include a downloading link of the desktop application. If the desktop application on the screen interface of the first terminal is not installed on the second terminal, the second terminal may receive an operation of tapping the uninstalled desktop application on the desktop, and the second terminal may download the tapped desktop application by using a downloading link of the desktop application in the desktop description file.

Optionally, in another embodiment of the desktop sharing method according to this embodiment of the present invention, when a desktop application, which is not installed on the second terminal but is displayed on the shared screen interface of the first terminal, is displayed on the desktop of the second terminal, a special mark may be added on an icon of the displayed desktop application. For example, words such as "not downloaded" are added, or blurring display is used, which is not limited herein.

Optionally, in another embodiment of the desktop sharing method according to this embodiment of the present invention, a first desktop information file further includes the desktop preview image of the first terminal. After the second terminal receives the desktop drawing file shared by the first terminal, and before the second terminal updates the desktop of the second terminal according to the received desktop drawing file, the method may further include: displaying, by the second terminal, the desktop preview image of the first terminal; and when a third operation is received, triggering the step of updating, by the second terminal, a desktop of the second terminal according to the received desktop drawing file, where the third operation is used to determine to use the received desktop drawing file.

In this embodiment of the present invention, a first terminal determines a desktop drawing file according to a desktop of the first terminal when a first operation of a user received by the first terminal meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element; and the first terminal shares the determined desktop drawing file, so that a second terminal updates a desktop of the second terminal according to the shared desktop drawing file. At least one application interface element on at least one screen interface on a desktop of a mobile terminal is shared, so that sharing the desktop of the mobile terminal is implemented, and a requirement for sharing and using one or more entire screen interfaces on the desktop of the mobile terminal by the user is met.

For ease of understanding, the following uses a specific application scenario to describe the desktop sharing method in this embodiment of the present invention.

A user of the first terminal may be a popular verified account, a technology talent, or another well-known figure on microblog, and a user of the second terminal may be a follower of the user of the first terminal, a common user, or the like.

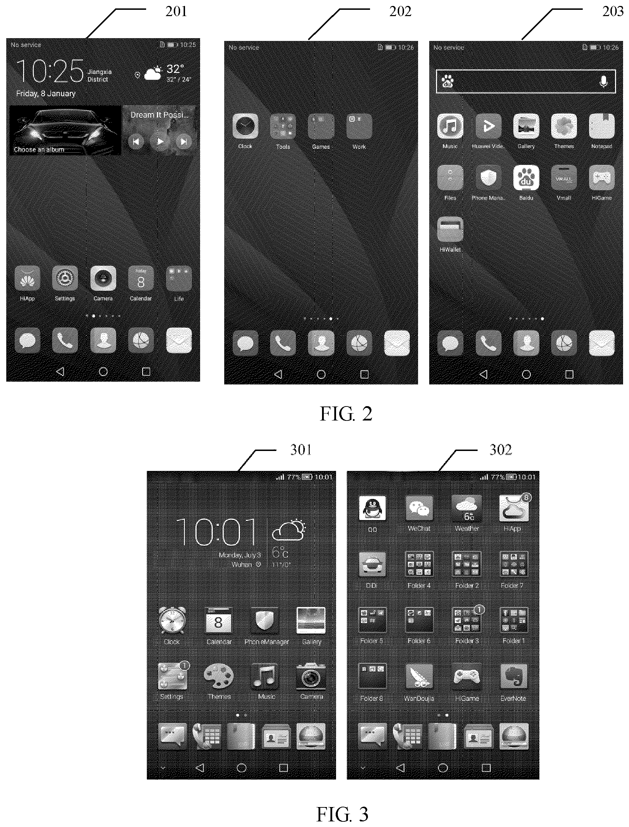

FIG. 2 shows a schematic diagram of the desktop of the first terminal. It can be learned that, the desktop of the first terminal has three screen interfaces that are a screen interface 201, a screen interface 202, and a screen interface 203, as shown in FIG. 2.

FIG. 3 shows a schematic diagram of the desktop of the second terminal. It can be learned that, the desktop of the second terminal has two screen interfaces that are a screen interface 301 and a screen interface 302, as shown in FIG. 3.

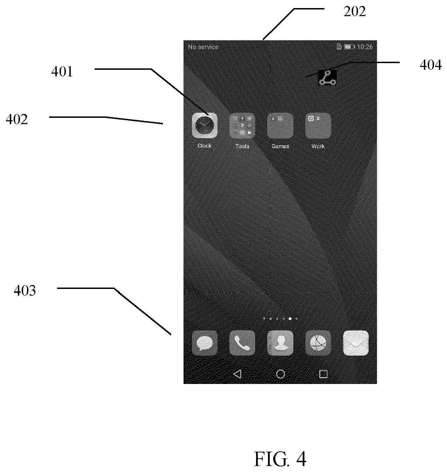

In actual application, in one situation, the desktop sharing button may be directly displayed on each screen interface of the first terminal. As shown in FIG. 4, a desktop sharing button 404 is displayed on the screen interface 202.

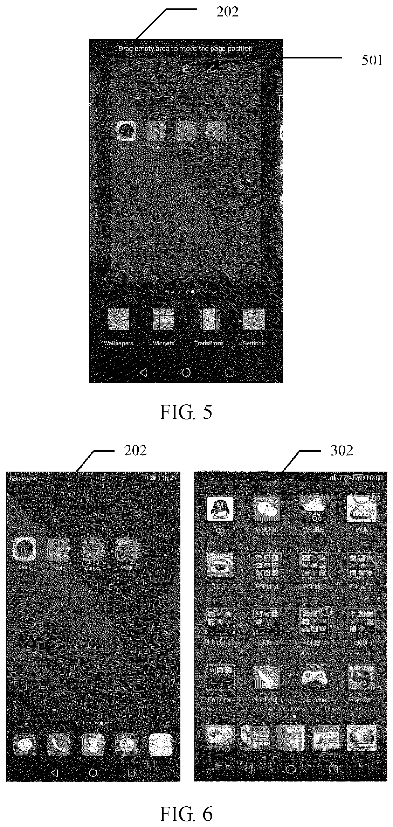

In another situation, the screen interface 202 is displayed on the first terminal, and the first terminal receives an operation of touching and holding any one icon on the screen interface by the user. The first terminal enters a desktop editing mode. As shown in FIG 5, in the desktop editing mode, a desktop sharing button 501 is displayed on the screen interface 202.

When the first terminal receives an operation of tapping the desktop sharing button 404 or the desktop sharing button 501 by the user, the first terminal pops up a sharing manner pop-up box for the user to select. The first terminal supports sharing to a social network by the user or sharing directly in a wireless direct connection (such as WiFi or Bluetooth) manner.

The first terminal receives a sharing manner selected by the user (for example, sharing to a social network is selected).

In a scenario 1, the first terminal shares the currently displayed screen interface 202 by default. The first terminal determines a desktop drawing file, where the desktop drawing file includes a desktop description file and a file package. The desktop description file includes a location, a file name, a package name, and a downloading link of each application interface element on the screen interface 202. For example, the desktop description file includes a location of a utility folder 401 on the screen interface 202, where the utility folder 401 includes a name and an arranging location of an icon, a location and a downloading link of a clock application 402 on the screen interface 202, a location of an information widget 403 on the desktop, and related information about other desktop interface elements. The file package includes a thumbnail of the application interface elements, a desktop wallpaper, and a thumbnail of the screen interface 202.

The first terminal shares the determined desktop drawing file to the social network.

The second terminal downloads, from the social network, the desktop drawing file shared by the first terminal. The second terminal parses the desktop drawing file, first reads the thumbnail of the screen interface 202 included in the file package, and then displays the thumbnail of the screen interface 202.

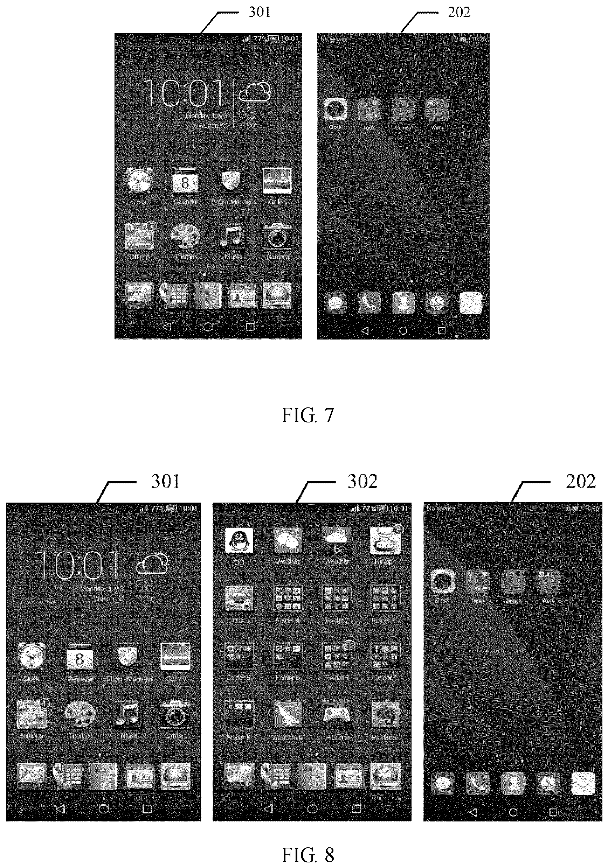

The second terminal receives an operation of determining to use the desktop drawing file by the user. According to the selection of the user, there are several situations:
1. The second terminal may use the screen interface 202 indicated by the desktop drawing file to replace a currently displayed screen interface (such as the screen interface 301) in the desktop drawing file of the second terminal, and an updated desktop of the second terminal is shown in FIG. 6.
2. The second terminal may use the screen interface 202 indicated by the desktop drawing file to replace a screen interface (such as the screen interface 302) that is in the desktop drawing file of the second terminal and whose number is the same as that of the screen interface 202, and an updated desktop of the second terminal is shown in FIG 7.
3. The second terminal may add the screen interface 202 indicated by the desktop drawing file into the current desktop drawing file of the second terminal, and an updated desktop of the second terminal is shown in FIG. 8.

After the second terminal updates the desktop, if the clock application 402 is not installed on the second terminal, when receiving an operation of tapping the clock application 402 by the user, the second terminal may use the downloading link of the clock application 402 included in the desktop drawing file to download and install the application.

In a scenario 2, the first terminal allows the user to select several screen interfaces for sharing. If the user selects the screen interface 201 and the screen interface 202 for sharing, the first terminal determines a desktop drawing file, where the desktop drawing file includes a desktop description file and a file package. The desktop description file includes a location, a file name, a package name, and a downloading link of each application interface element on the screen interface 202 and the screen interface 203.

After receiving the desktop drawing file, and when updating the desktop drawing file of the second terminal according to the selection of the user, the second terminal may replace the desktop drawing file of the second terminal, or may add the desktop drawing file into the desktop drawing file of the second terminal.

The desktop drawing file determined by the first terminal may further include a desktop theme, a desktop wallpaper, or the like, and may specifically include a description and a downloading link of the desktop theme and a theme and a downloading link of the desktop wallpaper.

If a desktop theme or a desktop wallpaper on the second terminal is not changed when the second terminal updates the desktop, after downloading the desktop theme or the desktop wallpaper by using the downloading link, the second terminal may replace the desktop wallpaper with the downloaded desktop wallpaper and apply the downloaded desktop theme.

The following separately describes mobile terminals serving as a first terminal and a second terminal in embodiments of the present invention.

### 1. Mobile terminal serving as the first terminal and configured to share a desktop

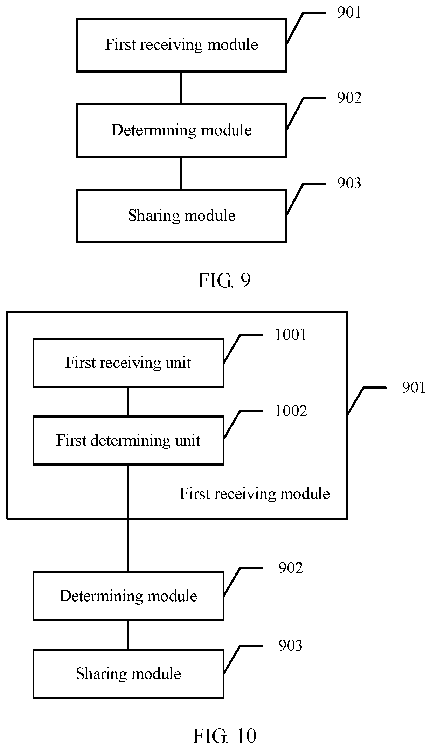

Referring to FIG 9, an embodiment of a mobile terminal according to an embodiment of the present invention includes:
a first receiving module 901, configured to receive a first operation of a user;
a determining module 902, configured to determine a desktop drawing file according to a desktop of the first terminal when the first operation received by the first receiving module 901 meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element; and
a sharing module 903, configured to share the determined desktop drawing file, so that a second terminal updates a desktop of the second terminal according to the shared desktop drawing file.

In this embodiment of the present invention, a determining module 902 determines a desktop drawing file according to a desktop of the first terminal when a first operation of a user received by a first receiving module 901 meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element; and a sharing module 903 shares the determined desktop drawing file, so that a second terminal updates a desktop of the second terminal according to the shared desktop drawing file. At least one application interface element on at least one screen interface on a desktop of a mobile terminal is shared, so that sharing the desktop of the mobile terminal is implemented, and a requirement for sharing and using one or more entire screen interfaces on the desktop of the mobile terminal by the user is met.

The foregoing application interface element includes a desktop wallpaper, a desktop application, a desktop widget Widget, or a folder on a desktop.

Optionally, when the at least one application interface element includes a desktop application, the desktop description file further includes a downloading link of the desktop application.

Optionally, the foregoing desktop drawing file further includes a desktop preview image of the first terminal.

Optionally, in another embodiment of the mobile terminal according to this embodiment of the present invention, the sharing module 903 is specifically configured to share the desktop drawing file directly to the second terminal by using a wireless connection, or share the desktop drawing file to a social network for the second terminal to download and use.

Optionally, referring to FIG. 10, in another embodiment of the mobile terminal according to this embodiment of the present invention, the foregoing first receiving module 901 specifically includes:
a first receiving unit 1001, configured to receive a tap operation of the user; and
a first determining unit 1002, configured to: when the first receiving unit 1001 receives an operation of tapping a desktop sharing button by the user, determine that the first operation meets the first preconfigured condition.

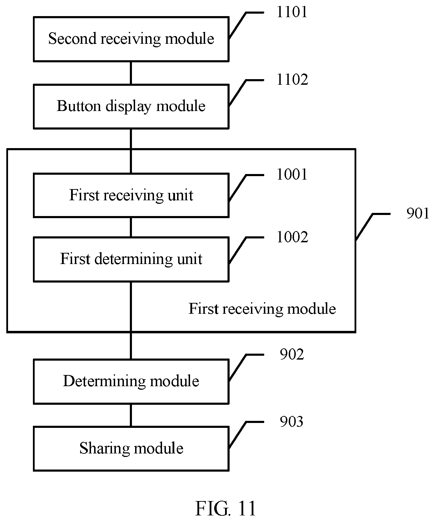

Optionally, referring to FIG. 11, in another embodiment of the mobile terminal according to this embodiment of the present invention, the mobile terminal shown in FIG. 10 further includes:
a second receiving module 1101, configured to receive a second operation of the user; and
a button display module 1102, configured to display a desktop editing interface when the second operation received by the second receiving module 1101 meets a second preconfigured condition, where the desktop sharing button is displayed on the desktop editing interface.

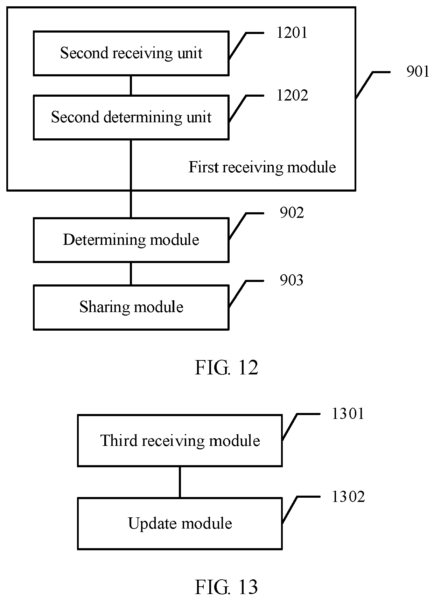

Optionally, referring to FIG. 12, in another embodiment of the mobile terminal according to this embodiment of the present invention, the first receiving module 901 in the mobile terminal shown in FIG 9 specifically includes:
a second receiving unit 1201, configured to receive a swipe operation of the user on a screen; and
a second determining unit 1202, configured to: when a swiping track meets a preset condition, determine that the first operation meets the first preconfigured condition.

### 2. Mobile terminal serving as the second terminal and configured to use a shared desktop

Referring to FIG. 13, another embodiment of a mobile terminal according to an embodiment of the present invention includes:
a third receiving module 1301, configured to receive a desktop drawing file shared by a first terminal, where the desktop drawing file includes a desktop description file and a file package of at least one screen interface on a desktop of the first terminal, the desktop description file includes a location of at least one application interface element on the desktop of the first terminal, and the file package includes a thumbnail of the at least one application interface element; and
an update module 1302, configured to update a desktop of the second terminal according to the desktop drawing file received by the third receiving module 1301.

In this embodiment of the present invention, a third receiving module 1301 receives a desktop drawing file shared by a first terminal, and an update module 1302 updates a desktop of the second terminal according to the received desktop drawing file, so that the desktop of the second terminal better meets a user's requirement and man-machine interaction performance of the terminal is improved.

The foregoing application interface element includes a desktop wallpaper, a desktop application, a desktop widget Widget, or a folder on a desktop.

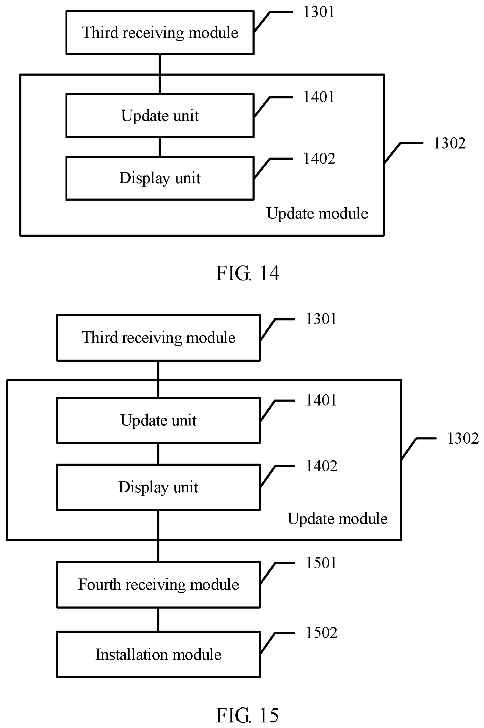

Optionally, referring to FIG. 14, in another embodiment of the mobile terminal according to this embodiment of the present invention, the foregoing update module 1302 specifically includes:
an update unit 1401, configured to update a desktop drawing file of the second terminal according to the received desktop drawing file; and
a display unit 1402, configured to display the desktop of the second terminal according to a desktop drawing file of the second terminal updated by the update unit 1401.

Optionally, in another embodiment of the mobile terminal according to this embodiment of the present invention, the foregoing display unit 1402 is specifically configured to replace a desktop wallpaper of the second terminal and/or arrange a desktop icon of the second terminal, according to the desktop drawing file of the second terminal updated by the update unit, where the desktop icon includes an icon of the desktop application, and/or an icon of the desktop widget, and/or an icon of the folder on the desktop.

Optionally, referring to FIG. 13, in another embodiment of the mobile terminal according to this embodiment of the present invention, when the at least one application interface element includes a desktop application, the desktop description file further includes a downloading link of the desktop application.

The mobile terminal further includes:
a fourth receiving module 1301, configured to: when the desktop application of the first terminal is not installed on the second terminal, receive an operation of tapping the uninstalled desktop application on the desktop; and
an installation module 1302, configured to download and install the tapped desktop application by using the downloading link of the desktop application in the desktop description file.

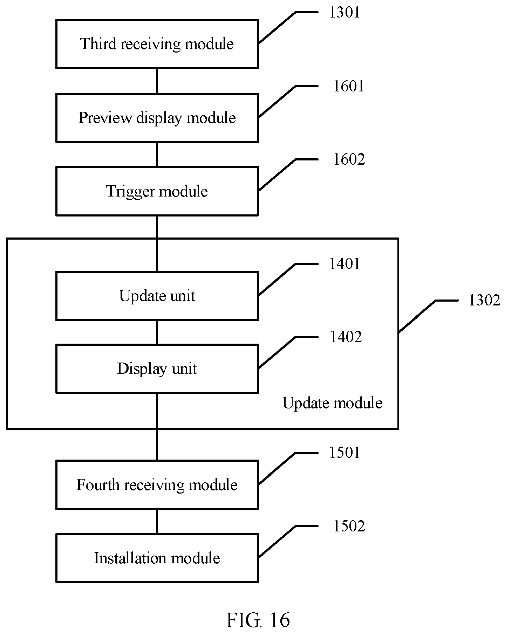

Optionally, referring to FIG. 16, in another embodiment of the mobile terminal according to this embodiment of the present invention, the first desktop information file further includes a desktop preview image of the first terminal.

The mobile terminal further includes:
a preview display module 1601, configured to display the desktop preview image of the first terminal; and
a trigger module 1602, configured to trigger the update module 1302 when a third operation is received, where the third operation is used to determine to use the received desktop drawing file.

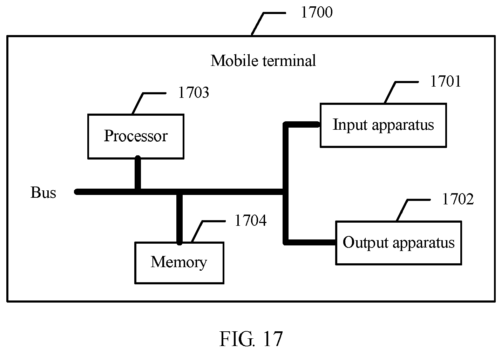

The foregoing describes the mobile terminal in this embodiment of the present invention from a perspective of a unitized functional entity. The following describes a mobile terminal in an embodiment of the present invention from a perspective of hardware processing. Referring to FIG. 17, FIG. 17 is a schematic structural diagram of a mobile terminal according to an embodiment of the present invention, where the mobile terminal may be a mobile terminal that serves as a first terminal, or may be a mobile terminal that serves as a second terminal. Another embodiment of the mobile terminal 1700 in this embodiment of the present invention includes:
an input apparatus 1701, an output apparatus 1702, a processor 1703, and a memory 1704 (there may be one or more processors 1703 in the mobile terminal 1700, and one processor 1703 is used as an example in FIG. 17). In some embodiments of the present invention, the input apparatus 1701, the output apparatus 1702, the processor 1703, and the memory 1704 may be connected by using a bus or by other means, and FIG 17 uses a bus connection as an example.

When the mobile terminal shown in FIG 17 is a mobile terminal that serves as the first terminal, the processor 1703 is configured to execute the following steps by invoking an operation instruction stored in the memory 1704:
receiving a first operation of a user;
determining a desktop drawing file according to a desktop of the first terminal when the first operation meets a first preconfigured condition, where the desktop drawing file includes a desktop description file and a file package of at least one screen interface on the desktop of the first terminal, the desktop description file includes a location of at least one application interface element on the desktop of the first terminal, and the file package includes a thumbnail of the at least one application interface element; and
sharing the determined desktop drawing file, so that a second terminal updates a desktop of the second terminal according to the shared desktop drawing file.

In some embodiments of the present invention, the application interface element includes a desktop wallpaper, a desktop application, a desktop widget Widget, or a folder on a desktop.

In some embodiments of the present invention, when the at least one application interface element includes a desktop application, the desktop description file further includes a downloading link of the desktop application.

In some embodiments of the present invention, the desktop drawing file further includes a desktop preview image of the first terminal.

In some embodiments of the present invention, when executing the step of sharing the determined desktop drawing file, the processor 1703 is specifically configured to execute the following step:
directly sharing the desktop drawing file to the second terminal by using a wireless connection; or
sharing the desktop drawing file to a social network for the second terminal to download and use.

In some embodiments of the present invention, when executing the step of receiving a first operation of a user, the processor 1703 is specifically configured to execute the following steps:
receiving a tap operation of the user; and
when an operation of tapping a desktop sharing button by the user is received, determining that the first operation meets the first preconfigured condition.

In some embodiments of the present invention, before executing the step of receiving a tap operation of the user, the processor 1703 is further configured to execute the following steps:
receiving a second operation of the user; and
entering a desktop editing interface when the second operation meets a second preconfigured condition, where the desktop sharing button is displayed on the desktop editing interface.

In some embodiments of the present invention, when executing the step of receiving a first operation of a user, the processor 1703 specifically executes the following steps:
receiving a swipe operation of the user on a screen; and
when a swiping track meets a preset condition, determining that the first operation meets the first preconfigured condition.

When the mobile terminal shown in FIG 17 is a mobile terminal that serves as the second terminal, the processor 1703 is configured to execute the following steps by invoking an operation instruction stored in the memory 1704:
receiving a desktop drawing file shared by a first terminal, where the desktop drawing file includes a desktop description file and a file package of at least one screen interface on a desktop of the first terminal, the desktop description file includes a location of at least one application interface element on the desktop of the first terminal, and the file package includes a thumbnail of the at least one application interface element; and
updating a desktop of the second terminal according to the received desktop drawing file.

In some embodiments of the present invention, the application interface element includes a desktop wallpaper, a desktop application, a desktop widget Widget, or a folder on a desktop.

In some embodiments of the present invention, when executing the step of updating a desktop of the second terminal according to the received desktop drawing file, the processor 1703 specifically executes the following steps:
updating a desktop drawing file of the second terminal according to the received desktop drawing file; and
displaying the desktop of the second terminal according to an updated desktop drawing file of the second terminal.

In some embodiments of the present invention, when executing the step of displaying the desktop of the second terminal according to an updated desktop drawing file of the second terminal, the processor 1703 specifically executes the following step:
replacing a desktop wallpaper of the second terminal and/or arranging a desktop icon of the second terminal, according to the updated desktop drawing file of the second terminal, where the desktop icon includes an icon of the desktop application, and/or an icon of the desktop widget, and/or an icon of the folder on the desktop.

In some embodiments of the present invention, when the at least one application interface element includes a desktop application, the desktop description file further includes a downloading link of the desktop application.

After executing the step of updating a desktop of the second terminal according to the received desktop drawing file, the processor 1703 is further configured to execute the following steps:
when the desktop application of the first terminal is not installed on the second terminal, receiving an operation of tapping the uninstalled desktop application on the desktop; and
downloading and installing the tapped desktop application by using the downloading link of the desktop application in the desktop description file.

In some embodiments of the present invention, the first desktop information file further includes a desktop preview image of the first terminal.

After executing the step of receiving a desktop drawing file shared by a first terminal, and before executing the step of updating a desktop of the second terminal according to the received desktop drawing file, the processor 1703 is further configured to execute the following steps:
displaying the desktop preview image of the first terminal; and
when a third operation is received, triggering the step of updating a desktop of the second terminal according to the received desktop drawing file, where the third operation is used to determine to use the received desktop drawing file.

This application also provides more implementation methods.

Embodiment 1. A desktop sharing method, comprising:
receiving, by a first terminal, a first operation of a user;
determining, by the first terminal, a desktop drawing file according to a desktop of the first terminal when the first operation meets a first preconfigured condition, where the desktop drawing file comprises a desktop description file and a file package of at least one screen interface on the desktop of the first terminal, the desktop description file comprises a location of at least one application interface element on the desktop of the first terminal, and the file package comprises a thumbnail of the at least one application interface element; and
sharing, by the first terminal, the determined desktop drawing file, so that a second terminal updates a desktop of the second terminal according to the shared desktop drawing file.

Embodiment 2. The method according to embodiment 1, where the application interface element comprises a desktop wallpaper, a desktop application, a desktop widget, or a folder on a desktop.

Embodiment 3. The method according to embodiment 1 or 2, where when the at least one application interface element comprises a desktop application, the desktop description file further comprises a downloading link of the desktop application.

Embodiment 4. The method according to any one of embodiments 1 to 3, where the desktop drawing file further comprises a desktop preview image of the first terminal.

Embodiment 5. The method according to any one of embodiments 1 to 4, where the sharing, by the first terminal, the determined desktop drawing file specifically comprises:
sharing, by the first terminal, the desktop drawing file directly to the second terminal by using a wireless connection; or
sharing, by the first terminal, the desktop drawing file to a social network for the second terminal to download and use.

Embodiment 6. The method according to any one of embodiments 1 to 5, where the receiving, by a first terminal, a first operation of a user specifically comprises:
receiving, by the first terminal, a tap operation of the user; and
when an operation of tapping a desktop sharing button by the user is received, determining that the first operation meets the first preconfigured condition.

Embodiment 7. The method according to embodiment 6, before the step of receiving, by the first terminal, a tap operation of the user, further comprising:
receiving, by the first terminal, a second operation of the user; and
entering, by the first terminal, a desktop editing interface when the second operation meets a second preconfigured condition, where the desktop sharing button is displayed on the desktop editing interface.

Embodiment 8. The method according to any one of embodiments 1 to 5, where the receiving, by a first terminal, a first operation of a user specifically comprises:
receiving, by the first terminal, a swipe operation of the user on a screen; and
determining, by the first terminal when a swiping track meets a preset condition, that the first operation meets the first preconfigured condition.

Embodiment 9. A desktop sharing method, comprising:
receiving, by a second terminal, a desktop drawing file shared by a first terminal, where the desktop drawing file comprises a desktop description file and a file package of at least one screen interface on a desktop of the first terminal, the desktop description file comprises a location of at least one application interface element on the desktop of the first terminal, and the file package comprises a thumbnail of the at least one application interface element; and
updating, by the second terminal, a desktop of the second terminal according to the received desktop drawing file.

Embodiment 10. The method according to embodiment 9, where the application interface element comprises a desktop wallpaper, a desktop application, a desktop widget Widget, or a folder on a desktop.

Embodiment 11. The method according to embodiment 9 or 10, where the updating, by the second terminal, a desktop of the second terminal according to the received desktop drawing file specifically comprises:
updating, by the second terminal, a desktop drawing file of the second terminal according to the received desktop drawing file; and
displaying, by the second terminal, the desktop of the second terminal according to an updated desktop drawing file of the second terminal.

Embodiment 12. The method according to embodiment 11, where the displaying, by the second terminal, the desktop of the second terminal according to an updated desktop drawing file of the second terminal specifically comprises:
replacing, by the second terminal, a desktop wallpaper of the second terminal and/or arranging a desktop icon of the second terminal, according to the updated desktop drawing file of the second terminal, where the desktop icon comprises an icon of the desktop application, and/or an icon of the desktop widget, and/or an icon of the folder on the desktop.

Embodiment 13. The method according to any one of embodiments 9 to 12, where when the at least one application interface element comprises a desktop application, the desktop description file further comprises a downloading link of the desktop application; and
after the step of updating, by the second terminal, a desktop of the second terminal according to the received desktop drawing file, the method further comprises:
receiving, by the second terminal when the desktop application of the first terminal is not installed on the second terminal, an operation of tapping the uninstalled desktop application on the desktop; and
downloading and installing, by the second terminal, the tapped desktop application by using the downloading link of the desktop application in the desktop description file.

Embodiment 14. The method according to any one of embodiments 9 to 13, where the first desktop information file further comprises a desktop preview image of the first terminal; and
after the step of receiving, by a second terminal, a desktop drawing file shared by a first terminal, and before the step of updating, by the second terminal, a desktop of the second terminal according to the received desktop drawing file, the method further comprises:
displaying, by the second terminal, the desktop preview image of the first terminal; and
when a third operation is received, triggering the step of updating, by the second terminal, a desktop of the second terminal according to the received desktop drawing file, where the third operation is used to determine to use the received desktop drawing file.

Embodiment 15. A mobile terminal, serving as a first terminal and configured to share a desktop, comprising:
a first receiving module, configured to receive a first operation of a user;
a determining module, configured to determine a desktop drawing file according to a desktop of the first terminal when the first operation received by the first receiving module meets a first preconfigured condition, where the desktop drawing file comprises a desktop description file and a file package of at least one screen interface on the desktop of the first terminal, the desktop description file comprises a location of at least one application interface element on the desktop of the first terminal, and the file package comprises a thumbnail of the at least one application interface element; and
a sharing module, configured to share the determined desktop drawing file, so that a second terminal updates a desktop of the second terminal according to the shared desktop drawing file.

Embodiment 16. The mobile terminal according to embodiment 15, where the application interface element comprises a desktop wallpaper, a desktop application, a desktop widget Widget, or a folder on a desktop;
when the at least one application interface element comprises a desktop application, the desktop description file further comprises a downloading link of the desktop application; and
the desktop drawing file further comprises a desktop preview image of the first terminal.

Embodiment 17. The mobile terminal according to embodiment 15 or 16, where the sharing module is specifically configured to share the desktop drawing file directly to the second terminal by using a wireless connection, or share the desktop drawing file to a social network for the second terminal to download and use.

Embodiment 18. The mobile terminal according to any one of embodiments 15 to 17, where the first receiving module specifically comprises:
a first receiving unit, configured to receive a tap operation of the user; and
a first determining unit, configured to: when the first receiving unit receives an operation of tapping a desktop sharing button by the user, determine that the first operation meets the first preconfigured condition.

Embodiment 19. The mobile terminal according to embodiment 18, where the mobile terminal further comprises:
a second receiving module, configured to receive a second operation of the user; and
a button display module, configured to display a desktop editing interface when the second operation received by the second receiving module meets a second preconfigured condition, where the desktop sharing button is displayed on the desktop editing interface.

Embodiment 20. The mobile terminal according to any one of embodiments 15 to 17, where the first receiving module specifically comprises:
a second receiving unit, configured to receive a swipe operation of the user on a screen; and
a second determining unit, configured to: when a swiping track meets a preset condition, determine that the first operation meets the first preconfigured condition.

Embodiment 21. A mobile terminal, serving as a second terminal and configured to use a shared desktop, comprising:
a third receiving module, configured to receive a desktop drawing file shared by a first terminal, where the desktop drawing file comprises a desktop description file and a file package of at least one screen interface on a desktop of the first terminal, the desktop description file comprises a location of at least one application interface element on the desktop of the first terminal, and the file package comprises a thumbnail of the at least one application interface element; and
an update module, configured to update a desktop of the second terminal according to the desktop drawing file received by the third receiving module.

Embodiment 22. The mobile terminal according to embodiment 21, where the application interface element comprises a desktop wallpaper, a desktop application, a desktop widget Widget, or a folder on a desktop.

Embodiment 23. The mobile terminal according to embodiment 21 or 22, where the update module specifically comprises:
an update unit, configured to update a desktop drawing file of the second terminal according to the received desktop drawing file; and
a display unit, configured to display the desktop of the second terminal according to a desktop drawing file of the second terminal updated by the update unit.

Embodiment 24. The mobile terminal according to embodiment 23, where the display unit is specifically configured to replace a desktop wallpaper of the second terminal and/or arrange a desktop icon of the second terminal, according to the desktop drawing file of the second terminal updated by the update unit, where the desktop icon comprises an icon of the desktop application, and/or an icon of the desktop widget, and/or an icon of the folder on the desktop.

Embodiment 25. The mobile terminal according to any one of embodiments 21 to 24, where when the at least one application interface element comprises a desktop application, the desktop description file further comprises a downloading link of the desktop application; and
the mobile terminal further comprises:
a fourth receiving module, configured to: when the desktop application of the first terminal is not installed on the second terminal, receive an operation of tapping the uninstalled desktop application on the desktop; and
an installation module, configured to download and install the tapped desktop application by using the downloading link of the desktop application in the desktop description file.

Embodiment 26. The mobile terminal according to any one of embodiments 21 to 25, where the first desktop information file further comprises a desktop preview image of the first terminal; and
the mobile terminal further comprises:
a preview display module, configured to display the desktop preview image of the first terminal; and
a trigger module, configured to trigger the update module when a third operation is received, where the third operation is used to determine to use the received desktop drawing file.

Embodiment 27. A mobile terminal, serving as a first terminal and configured to share a desktop, comprising:
an input apparatus, an output apparatus, a processor, and a memory; where
the processor is configured to execute the following steps by invoking an operation instruction stored in the memory:
   receiving a first operation of a user;
   determining a desktop drawing file according to a desktop of the first terminal when the first operation meets a first preconfigured condition, where the desktop drawing file comprises a desktop description file and a file package of at least one screen interface on the desktop of the first terminal, the desktop description file comprises a location of at least one application interface element on the desktop of the first terminal, and the file package comprises a thumbnail of the at least one application interface element; and
   sharing the determined desktop drawing file, so that a second terminal updates a desktop of the second terminal according to the shared desktop drawing file.

Embodiment 28. The mobile terminal according to embodiment 27, where the application interface element comprises a desktop wallpaper, a desktop application, a desktop widget Widget, or a folder on a desktop.

Embodiment 29. The mobile terminal according to embodiment 27 or 28, where when the at least one application interface element comprises a desktop application, the desktop description file further comprises a downloading link of the desktop application.

Embodiment 30. The mobile terminal according to any one of embodiments 27 to 29, where the desktop drawing file further comprises a desktop preview image of the first terminal.

Embodiment 31. The mobile terminal according to any one of embodiments 27 to 30, where when executing the step of sharing the determined desktop drawing file, the processor is specifically configured to execute the following step:
sharing the desktop drawing file directly to the second terminal by using a wireless connection; or
sharing the desktop drawing file to a social network for the second terminal to download and use.

Embodiment 32. The mobile terminal according to any one of embodiments 27 to 31, where when executing the step of receiving a first operation of a user, the processor is specifically configured to execute the following steps:
receiving a tap operation of the user; and
when an operation of tapping a desktop sharing button by the user is received, determining that the first operation meets the first preconfigured condition.

Embodiment 33. The mobile terminal according to embodiment 32, where before executing the step of receiving a tap operation of the user, the processor is further configured to execute the following steps:
receiving a second operation of the user; and
entering a desktop editing interface when the second operation meets a second preconfigured condition, where the desktop sharing button is displayed on the desktop editing interface.

Embodiment 34. The mobile terminal according to any one of embodiments 27 to 32, where when executing the step of receiving a first operation of a user, the processor specifically executes the following steps:
receiving a swipe operation of the user on a screen; and
when a swiping track meets a preset condition, determining that the first operation meets the first preconfigured condition.

Embodiment 35. A mobile terminal, serving as a second terminal and configured to use a shared desktop, comprising:
an input apparatus, an output apparatus, a processor, and a memory; where
the processor is configured to execute the following steps by invoking an operation instruction stored in the memory:
   receiving a desktop drawing file shared by a first terminal, where the desktop drawing file comprises a desktop description file and a file package of at least one screen interface on a desktop of the first terminal, the desktop description file comprises a location of at least one application interface element on the desktop of the first terminal, and the file package comprises a thumbnail of the at least one application interface element; and
   updating a desktop of the second terminal according to the received desktop drawing file.

Embodiment 36. The method according to embodiment 35, where the application interface element comprises a desktop wallpaper, a desktop application, a desktop widget Widget, or a folder on a desktop.

Embodiment 37. The method according to embodiment 35 or 36, where when executing the step of updating a desktop of the second terminal according to the received desktop drawing file, the processor specifically executes the following steps:
updating a desktop drawing file of the second terminal according to the received desktop drawing file; and
displaying the desktop of the second terminal according to an updated desktop drawing file of the second terminal.

Embodiment 38. The method according to embodiment 37, where when executing the step of displaying the desktop of the second terminal according to an updated desktop drawing file of the second terminal, the processor specifically executes the following step:
replacing a desktop wallpaper of the second terminal and/or arranging a desktop icon of the second terminal, according to the updated desktop drawing file of the second terminal, where the desktop icon comprises an icon of the desktop application, and/or an icon of the desktop widget, and/or an icon of the folder on the desktop.

Embodiment 39. The method according to any one of embodiments 35 to 38, where when the at least one application interface element comprises a desktop application, the desktop description file further comprises a downloading link of the desktop application; and
after executing the step of updating a desktop of the second terminal according to the received desktop drawing file, the processor is further configured to execute the following steps:
when the desktop application of the first terminal is not installed on the second terminal, receiving an operation of tapping the uninstalled desktop application on the desktop; and
downloading and installing the tapped desktop application by using the downloading link of the desktop application in the desktop description file.

Embodiment 40. The method according to any one of embodiments 35 to 39, where the first desktop information file further comprises a desktop preview image of the first terminal; and
after executing the step of receiving a desktop drawing file shared by a first terminal, and before executing the step of updating a desktop of the second terminal according to the received desktop drawing file, the processor is further configured to execute the following steps:
displaying the desktop preview image of the first terminal; and
when a third operation is received, triggering the step of updating a desktop of the second terminal according to the received desktop drawing file, where the third operation is used to determine to use the received desktop drawing file.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention.

## Claims

1. A desktop sharing method, comprising:
receiving (101), by a first terminal, a first operation of a user;
when the first operation meets a first preconfigured condition, receiving, by the first terminal, an operation of selecting at least one application interface element that needs to be shared;
determining (102), by the first terminal, a desktop drawing file according to the at least one application interface element on a desktop of the first terminal when the first operation meets the first preconfigured condition; and
sharing (103), by the first terminal to a second terminal, the determined desktop drawing file;
wherein the desktop drawing file comprises location information of the selected at least one application interface element, a thumbnail of the selected at least one application interface element and an instruction related to the selected at least one application interface element, wherein the application interface element is a desktop application.

2. The method according to claim 1, wherein the desktop drawing file further comprises a desktop preview image of the first terminal.

3. The method according to claim 1 or claim 2, wherein the sharing, by the first terminal, the determined desktop drawing file comprises:
sharing, by the first terminal, the desktop drawing file directly to the second terminal by using a wireless connection; or
sharing, by the first terminal, the desktop drawing file to a social network for the second terminal to download and use.

4. The method according to any one of claim 1 to 3, wherein the receiving the first operation of the user comprises tapping a desktop sharing button by the user.

5. The method according to claim 4, before the step of receiving, by the first terminal, a tap operation of the user, further comprising:
receiving, by the first terminal, a second operation of the user; and
entering, by the first terminal, a desktop editing interface and displaying on the desktop an editing interface.

6. The method according to any one of claim 1 to 5, wherein the desktop description file is a file in an XML format.

7. A mobile terminal, serving as a first terminal, comprising:
an input apparatus, an output apparatus, a processor, and a memory;
wherein the memory are coupled to the processor, the memory is configured to store instructions, and the processor invoke the computer instructions to enable the mobile terminal to perform the method according any one of claims 1 to 6.

8. A computer-readable storage medium, comprising instructions, wherein when the instructions are run on a mobile device, the mobile device is enabled to perform the method according to any one of claims 1 to 6.

9. A desktop sharing method, comprising:
receiving (104), by a second terminal, a desktop drawing file shared , according to claim 1, by a first terminal; and
updating (105), by the second terminal, a desktop of the second terminal according to the received desktop drawing file;
wherein the desktop drawing file comprises location information of a selected at least one application interface element, a thumbnail of the selected at least one application interface element and an instruction related to the selected at least one application interface element, wherein the application interface element is a desktop application of the first terminal.

10. The method according to claim 9, wherein the desktop description file is a file in an XML format.

11. The method according to claim 9, wherein updating the desktop of the second terminal according to an updated desktop drawing file, comprising:
replacing a desktop wallpaper of the second terminal and/or arranging a desktop icon of the second terminal, according to the updated desktop drawing file of the second terminal, wherein the desktop icon comprises an icon of the desktop application, and/or an icon of the desktop widget, and/or an icon of the folder on the desktop.

12. The method according to claim 9, wherein the first desktop information file further comprises a desktop preview image of the first terminal.

13. The method according to claim 12, after executing the step of receiving a desktop drawing file shared by a first terminal, and before executing the step of updating a desktop of the second terminal according to the received desktop drawing file, further comprising:
displaying the desktop preview image of the first terminal; and
when a third operation is received, triggering the step of updating a desktop of the second terminal according to the received desktop drawing file, wherein the third operation is used to determine to use the received desktop drawing file.

14. A mobile terminal, serving as a second terminal, comprising:
an input apparatus, an output apparatus, a processor, and a memory;
wherein the memory are coupled to the processor, the memory is configured to store instructions, and the processor invoke the computer instructions to enable the mobile terminal to perform the method according any one of claims 9 to 13.

15. A computer-readable storage medium, comprising instructions, wherein when the instructions are run on a mobile device, the mobile device is enabled to perform the method according to any one of claims 9 to 13.

## Patentansprüche

1. Desktop-Sharing-Verfahren, das Folgendes umfasst:
Empfangen (101), durch ein erstes Endgerät, eines ersten Bedienvorgangs eines Benutzers;
wenn der erste Bedienvorgang eine erste vorkonfigurierte Bedingung erfüllt, Empfangen, durch das erste Endgerät, eines Bedienvorgangs zum Auswählen mindestens eines Anwendungsoberflächenelements, das geshart werden muss;
Bestimmen (102), durch das erste Endgerät, einer Desktop-Zeichnungsdatei gemäß dem mindestens einen Anwendungsoberflächenelement auf einem Desktop des ersten Endgeräts, wenn der erste Bedienvorgang die erste vorkonfigurierte Bedingung erfüllt; und
Sharen (103), durch das erste Endgerät an ein zweites Endgerät, der bestimmten Desktop-Zeichnungsdatei;
wobei die Desktop-Zeichnungsdatei Positionsinformationen des ausgewählten mindestens einen Anwendungsoberflächenelements, eine Miniaturansicht des ausgewählten mindestens einen Anwendungsoberflächenelements und eine Anweisung in Bezug auf das ausgewählte mindestens eine Anwendungsoberflächenelement umfasst, wobei das Anwendungsoberflächenelement eine Desktop-Anwendung ist.

2. Verfahren nach Anspruch 1, wobei die Desktop-Zeichnungsdatei ferner ein Desktop-Vorschaubild des ersten Endgeräts umfasst.

3. Verfahren nach Anspruch 1 oder Anspruch 2, wobei das Sharen, durch das erste Endgerät, der bestimmten Desktop-Zeichnungsdatei Folgendes umfasst:
Sharen, durch das erste Endgerät, der Desktop-Zeichnungsdatei direkt an das zweite Endgerät unter Verwendung einer drahtlosen Verbindung; oder
Sharen, durch das erste Endgerät, der Desktop-Zeichnungsdatei an ein soziales Netzwerk zum Herunterladen und zur Verwendung durch das zweite Endgerät.

4. Verfahren nach einem der Ansprüche 1 bis 3, wobei das Empfangen des ersten Bedienvorgangs des Benutzers das Antippen einer Desktop-Sharing-Schaltfläche durch den Benutzer umfasst.

5. Verfahren nach Anspruch 4, das vor dem Schritt des Empfangens, durch das erste Endgerät, eines Antippbedienvorgangs des Benutzers ferner Folgendes umfasst:
Empfangen, durch das erste Endgerät, eines zweiten Bedienvorgangs des Benutzers; und
Eintreten, durch das erste Endgerät, in eine Desktop-Bearbeitungsoberfläche und Anzeigen einer Bearbeitungsoberfläche auf dem Desktop.

6. Verfahren nach einem der Ansprüche 1 bis 5, wobei die Desktop-Beschreibungsdatei eine Datei in einem XML-Format ist.

7. Mobiles Endgerät, das als ein erstes Endgerät dient, umfassend:
eine Eingabeeinrichtung, eine Ausgabeeinrichtung, einen Prozessor und einen Speicher;
wobei der Speicher mit dem Prozessor gekoppelt ist, der Speicher dazu ausgelegt ist, Anweisungen zu speichern, und der Prozessor die Computeranweisungen aufruft, um zu ermöglichen, dass das mobile Endgerät das Verfahren nach einem der Ansprüche 1 bis 6 durchführt.

8. Computerlesbares Speichermedium, das Anweisungen umfasst, wobei eine Ausführung der Anweisungen auf einer mobilen Vorrichtung ermöglicht, dass die mobile Vorrichtung das Verfahren nach einem der Ansprüche 1 bis 6 durchführt.

9. Desktop-Sharing-Verfahren, das Folgendes umfasst:
Empfangen (104), durch ein zweites Endgerät, einer Desktop-Zeichnungsdatei, die gemäß Anspruch 1 durch ein erstes Endgerät geshart wird; und
Aktualisieren (105), durch das zweite Endgerät, eines Desktops des zweiten Endgeräts gemäß der empfangenen Desktop-Zeichnungsdatei;
wobei die Desktop-Zeichnungsdatei Positionsinformationen eines ausgewählten mindestens einen Anwendungsoberflächenelements, eine Miniaturansicht des ausgewählten mindestens einen Anwendungsoberflächenelements und eine Anweisung in Bezug auf das ausgewählte mindestens eine Anwendungsoberflächenelement umfasst, wobei das Anwendungsoberflächenelement eine Desktop-Anwendung des ersten Endgeräts ist.

10. Verfahren nach Anspruch 9, wobei die Desktop-Beschreibungsdatei eine Datei in einem XML-Format ist.

11. Verfahren nach Anspruch 9, wobei das Aktualisieren des Desktops des zweiten Endgeräts gemäß einer aktualisierten Desktop-Zeichnungsdatei Folgendes umfasst:
Ersetzen eines Desktop-Hintergrundbilds des zweiten Endgeräts und/oder Anordnen eines Desktop-Symbols des zweiten Endgeräts gemäß der aktualisierten Desktop-Zeichnungsdatei des zweiten Endgeräts, wobei das Desktop-Symbol ein Symbol der Desktop-Anwendung und/oder ein Symbol des Desktop-Widgets und/oder ein Symbol des Ordners auf dem Desktop umfasst.

12. Verfahren nach Anspruch 9, wobei die erste Desktop-Informationsdatei ferner ein Desktop-Vorschaubild des ersten Endgeräts umfasst.

13. Verfahren nach Anspruch 12, das nach dem Ausführen des Schritts des Empfangens einer durch ein erstes Endgerät gesharten Desktop-Zeichnungsdatei und vor dem Ausführen des Schritts des Aktualisierens eines Desktops des zweiten Endgeräts gemäß der empfangenen Desktop-Zeichnungsdatei ferner Folgendes umfasst:
Anzeigen des Desktop-Vorschaubilds des ersten Endgeräts; und
wenn ein dritter Bedienvorgang empfangen wird, Auslösen des Schritts des Aktualisierens eines Desktops des zweiten Endgeräts gemäß der empfangenen Desktop-Zeichnungsdatei, wobei der dritte Bedienvorgang verwendet wird, um die Verwendung der empfangenen Desktop-Zeichnungsdatei zu bestimmen.

14. Mobiles Endgerät, das als ein zweites Endgerät dient, umfassend:
eine Eingabeeinrichtung, eine Ausgabeeinrichtung, einen Prozessor und einen Speicher;
wobei der Speicher mit dem Prozessor gekoppelt ist, der Speicher dazu ausgelegt ist, Anweisungen zu speichern, und der Prozessor die Computeranweisungen aufruft, um zu ermöglichen, dass das mobile Endgerät das Verfahren nach einem der Ansprüche 9 bis 13 durchführt.

15. Computerlesbares Speichermedium, das Anweisungen umfasst, wobei eine Ausführung der Anweisungen auf einer mobilen Vorrichtung ermöglicht, dass die mobile Vorrichtung das Verfahren nach einem der Ansprüche 9 bis 13 durchführt.

## Revendications

1. Procédé de partage de bureau, le procédé comprenant les étapes suivantes :
recevoir (101), par un premier terminal, une première opération d'un utilisateur ;
lorsque la première opération satisfait à une première condition préconfigurée, recevoir, par le premier terminal, une opération de sélection d'au moins un élément d'interface d'application devant être partagé ;
déterminer (102), par le premier terminal, un fichier de dessin de bureau en fonction de l'au moins un élément d'interface d'application sur un bureau du premier terminal lorsque la première opération satisfait la première condition préconfigurée ; et
partager (103), par le premier terminal avec un deuxième terminal, le fichier de dessin de bureau déterminé ;
le fichier de dessin de bureau comprenant des informations d'emplacement de l'au moins un élément d'interface d'application sélectionné, une vignette de l'au moins un élément d'interface d'application sélectionné et une instruction liée à l'au moins un élément d'interface d'application sélectionné, l'élément d'interface d'application étant une application de bureau.

2. Procédé selon la revendication 1, dans lequel le fichier de dessin de bureau comprend en outre une image de prévisualisation de bureau du premier terminal.

3. Procédé selon la revendication 1 ou la revendication 2, dans lequel le partage, par le premier terminal, du fichier de dessin de bureau déterminé comprend les étapes suivantes :
partager, par le premier terminal, le fichier de dessin de bureau directement avec le deuxième terminal à l'aide d'une connexion sans fil ; ou
partager, par le premier terminal, le fichier de dessin de bureau avec un réseau social en vue de son téléchargement et son utilisation par le deuxième terminal.

4. Procédé selon l'une quelconque des revendications 1 à 3, dans lequel la réception de la première opération de l'utilisateur comprend le fait d'appuyer sur un bouton de partage de bureau par l'utilisateur.

5. Procédé selon la revendication 4 comprenant en outre, avant l'étape de réception par le premier terminal d'une opération de tapotement de l'utilisateur, les étapes suivantes :
recevoir, par le premier terminal, une deuxième opération de l'utilisateur ; et
saisir, par le premier terminal, une interface d'édition de bureau et afficher sur le bureau une interface d'édition.

6. Procédé selon l'une quelconque des revendications 1 à 5, dans lequel le fichier de description de bureau est un fichier au format XML.

7. Terminal mobile, servant de premier terminal, comprenant :
un appareil d'entrée, un appareil de sortie, un processeur et une mémoire ;
les mémoires étant couplées au processeur, la mémoire étant configurée pour stocker des instructions, et le processeur invoquant les instructions d'ordinateur pour permettre au terminal mobile de réaliser le procédé selon l'une quelconque des revendications 1 à 6.

8. Support de stockage lisible par ordinateur, comprenant des instructions, dans lequel, lorsque les instructions sont exécutées sur un dispositif mobile, le dispositif mobile peut exécuter le procédé selon l'une quelconque des revendications 1 à 6.

9. Procédé de partage de bureau, le procédé comprenant les étapes suivantes :
recevoir (104), par un deuxième terminal, un fichier de dessin de bureau partagé, selon la revendication 1, par un premier terminal ; et
mettre à jour (105), par le deuxième terminal, un bureau du deuxième terminal en fonction du fichier de dessin de bureau reçu ;
dans lequel le fichier de dessin de bureau comprend des informations d'emplacement d'au moins un élément d'interface d'application sélectionné, une vignette de l'au moins un élément d'interface d'application sélectionné et une instruction liée à l'au moins un élément d'interface d'application sélectionné, l'élément d'interface d'application étant une application de bureau du premier terminal.

10. Procédé selon la revendication 9, dans lequel le fichier de description de bureau est un fichier dans un format XML.

11. Procédé selon la revendication 9, dans lequel la mise à jour du bureau du deuxième terminal en fonction d'un fichier de dessin de bureau mis à jour comprend les étapes suivantes :
remplacer un fond d'écran de bureau du deuxième terminal et/ou agencer une icône de bureau du deuxième terminal en fonction du fichier de dessin de bureau mis à jour du deuxième terminal, l'icône de bureau comprenant une icône de l'application de bureau, et/ou une icône du widget de bureau, et/ou une icône du dossier sur le bureau.

12. Procédé selon la revendication 9, dans lequel le premier fichier d'informations de bureau comprend en outre une image de prévisualisation de bureau du premier terminal.

13. Procédé selon la revendication 12 comprenant en outre, après l'exécution de l'étape de réception d'un fichier de dessin de bureau partagé par un premier terminal, et avant l'exécution de l'étape de mise à jour d'un bureau du deuxième terminal conformément au fichier de dessin de bureau reçu, les étapes suivantes :
afficher l'image d'aperçu du bureau du premier terminal ; et
lorsqu'une troisième opération est reçue, déclencher l'étape de mise à jour d'un bureau du deuxième terminal en fonction du fichier de dessin de bureau reçu, la troisième opération étant utilisée pour déterminer l'utilisation du fichier de dessin de bureau reçu.

14. Terminal mobile, servant de deuxième terminal, comprenant :
un appareil d'entrée, un appareil de sortie, un processeur et une mémoire ;
les mémoires étant couplées au processeur, la mémoire étant configurée pour stocker des instructions, et le processeur invoquant les instructions d'ordinateur pour permettre au terminal mobile de réaliser le procédé selon l'une quelconque des revendications 9 à 13.

15. Support de stockage lisible par ordinateur, comprenant des instructions, dans lequel, lorsque les instructions sont exécutées sur un dispositif mobile, le dispositif mobile peut exécuter le procédé selon l'une quelconque des revendications 9 à 13.
